# EUROPEAN PATENT APPLICATION

(11) **EP 3 940 160 A1**
(43) Date of publication of application: **19.01.2022**
(21) Application number: 21185581.2
(22) Date of filing: 14.07.2021
(51) Int. Cl.: E04B 5/26, E04B 5/48, F24S 20/64, E04B 1/94

(54) **DISPOSABLE FORMWORK WITH INTEGRATED WATER TANK, DEVELOPED TO STORE WATER INSIDE ATTICS AND BUILDING ROOFS**

(30) Priority: 16.07.2020 IT 202000017311; 16.07.2020 IT 202000004249 U
(71) Applicant: Coslovi Longo, Christian, 98039 Taormina (IT)
(72) Inventor: Coslovi Longo, Christian, 98039 Taormina (IT)
(74) Representative: Emmi, Mario

(57) **Abstract**

The invention pertains to a disposable formwork to make slabs and/or roofing in reinforced concrete wherein said formwork comprises an integrated water tank (10).

## Description

### Field of the invention

This invention relates to an innovative water storage system, and more specifically, a new disposable formwork for the construction industry equipped with an integrated water tank, to store water at atmospheric pressure inside slabs and roofing of buildings, for different types of applications, as for example: rainwater collection, surface water collection, groundwater collection, grey water collection, fireproof water collection, drinking water collection, water collection for several technological purposes. In the event where it is used as part of a service which recycles groundwater or hydro-resources directly on-site, this invention also relates to eco-sustainable technologies and can contribute to improving the environmental balance of the building-installation system.

Moreover, in the event where it is used to provide a fireproof water collection, this invention also relates to the fireproof protection systems in operation.

### Brief overview of known technique

The use of disposable formworks to make slabs and roofing in reinforced concrete is commonly known. In the majority of cases, disposable formworks are used for lightening and serve as thermal and sound insulation. Essentially, they are parallelepiped-shaped and they are positioned side-by-side or at intervals with joists on a temporary floor and/or on curbs and lintels, furthermore, they serve to support the metallic reinforcement and to hold the concrete casting until shaping a 5cm thickness of concrete topping (which is used to distribute the load between several ribs).

Most of the disposable formworks are made up of profiled blocks of expanded polystyrene (EPS) with integrated stiffening metal rods and/or corrugated metal sheets, which serve to improve the static capacities to support the weight of metallic reinforcements, of workforces throughout completion of the work and of the concrete casting.

In any case, the described known technique poses certain disadvantages. The volume of disposable formworks, which normally makes up the majority of the overall volume of the structure cast in place, apart from the aforementioned functions, is not used to obtain water reserves.

Another disadvantage that the known technique poses is the limited versatility of disposable formworks relating to the potential requirements to transform the rooms below, for example in the case of redevelopment projects which need higher levels of fire resistance, or modifications of suspended ceilings and systems contained therein, which need greater installation spaces for distribution networks, with respect to the initial project conditions.

Furthermore, the publications US 2018/147432, US 4442826 and US4164933 are known.

### Summary of the invention

The aim of this invention is to overcome the disadvantages posed by the known technique.

This invention in particular aims to create a disposable formwork which, besides the above-described functions, allows water to be stored at atmospheric pressure, completing the overall architectural integration of the storage volume and the active use of a significant part of building volume constituting the inside of the slabs and roofing.

One of the other aims of this invention is to produce an innovative water storage system in building slabs and roofing for the recycling and use of rainwater collected by the building itself, or for the reuse of grey water produced by the building itself, for example to feed the flushing cisterns of toilets placed at an underlying level.

Another aim of this invention is to offer an extremely versatile disposable formwork, capable of supporting the ceiling arrangement of technological systems and the application of panels in general, of providing a system to create technical suspended ceilings and of effortlessly enabling further potential transformations.

Yet another aim of this invention is to offer an innovative system for modular prefabricated water storage for the construction industry, able to be produced by using the available technologies.

Basically, these aims are reached with a disposable formwork to make slabs and roofing, largely comprising:
- An integrated water tank;
- A shaped casing, made up of one or more materials that have thermal and acoustic insulation properties;
- A metal frame;

In regard to the state of the known technique, this invention offers the benefit of recycling an extremely significant part of the volume of the disposable formwork in order to obtain a capacity of water storage which can be used directly within the building, as a complete architectural integration and with loads on a full cistern which are fully compatible with the known technique used to implement slabs and roofing in reinforced concrete.

Another advantage of this invention is that it enables storage at atmospheric pressure, inside slabs and roofing, of rainwater or recycled water, for example, to fill the underlying flush toilet cisterns, thanks to the difference of the water head among said devices. Therefore, this invention offers the additional advantage of favouring the integration of building systems aiming at a more eco-friendly use of water resources in buildings, as well as energy savings. In fact, less use of water from the external water supply network means lower energy consumption used in water collection, processing and distributing systems towards the final utilities, therefore, consequently, the invention can also contribute to reducing global greenhouse gas emissions.

Another advantage of this invention is integrating, in slabs and roofing, water volumes that can be used as fireproof water reserves, thereby preventing said volumes from being found in other parts of the building. The possibility to position a fireproof water reserve in slabs and roofing in a distributed way can allow a gravity feed in specific circumstances, because of the difference in the water head, for example of fire sprinkler systems.

Another advantage of this invention is determined by its versatility of use, both in the initial project conditions and in the event of transformations and redevelopments of the rooms below, through the specific shape and layout of the metal frame, upon which, additional iron reinforcements can be tied effortlessly and wherein wooden boarding floors can be positioned to make temporary walkways for workforces throughout the completion of the work.

Therefore, the subject of this invention in particular is a disposable formwork with an integrated water tank (10), developed to store water inside slabs and roofing of buildings, comprising:
- A shaped casing (14), made up of at least one element of material with thermal and acoustic insulation properties, with modular breadth, length and height, a rectangular plan designed to facilitate a side-by-side and adherent junction of several modules (10), a transverse shaped section constituted by a central body defined by the part of the upper casing (14a) and by a substantially parallelepiped-shaped base defined by the part of the lower casing (14b), which extends along the whole breadth of the module (10);
- A metal frame (13), made up of horizontal transverse upper (13a) and lower (13b), elements, horizontal longitudinal upper (13d) and lower (13e) elements, vertical (13c) elements connected to shape an integral structure;
- In accordance with the invention, the formwork comprises at least one substantially parallelepiped-shaped water tank (11) integrated within the shaped casing (14) resting or fixed on the upper side of the horizontal transverse lower elements (13b) of the metal frame (13), said tank (11), equipped with at least one supply pipe with a longitudinal (12a) and/or transverse (12f) and/or vertical (12d) axis as with respect to the module (10) and also to be used as an air vent, for at least one bottom pipe with longitudinal (12b) and/or transverse (12c) and/or vertical (12e) axis as with respect to the module (10) and for the purpose of supplying water utilities within the building and drainage at the bottom, wherein said pipe (12c) can also enable the interconnection of adjacent modules (10).

Advantageously, said disposable formwork with an integrated water tank (10) can comprise metal tubular elements (15a) equipped with internal threading, welded with a vertical axis to the metal frame (13) on at least one of the sides and on the base of the vertical element (13c), said metal tubular element (15a) continues in length beyond the horizontal transverse lower element (13b) of the metal frame (13) and goes through the thickness of the part of the lower casing (14b), to anchor, through screws of the known types, further elements suitable for housing pipes for technological systems and suspended ceilings in general or panels (17) in general.

Advantageously, said disposable formwork with an integrated water tank (10) can comprise a metal support element (16), suitable for supporting technological ceiling systems, said support (16), with metal tubular elements (15b) (15c) integrated by welding, equipped with internal threading, wherein said metal tubular elements (15b) allow the support to be fixed (16) to the metal frame (13) through the metal tubular elements (15a), wherein said metal tubular elements (15c) enable the anchoring of panels (17) in general.

Advantageously, the tank's casing (11) can be made by extruding high-density polyethylene, polypropylene or other similar materials, wherein said tank (11) has a metal stiffening support (11a) built into the thickness of the bottom of the casing.

Advantageously, said shaped casing (14) can be made with at least the lower part (14b) made up of a stiff material able to support the full weight of the tank (11) without producing significant deformations along the inter-axis between the horizontal transverse lower elements (13b) of the metal frame (13).

Advantageously, said the metal angular elements (13f), suitable for further reinforcing the structure of the metal frame (13), can be integrated by welding them into the frame (13).

Therefore, the subject of this invention is also a method to make a slab and/or roofing in reinforced concrete, the method comprising the following phases:
- Production of one or more prefabricated and transportable disposable formworks;
- Production of temporary flooring;
- Arrangement of said disposable formworks onto said temporary flooring;
- Fitting of a metal reinforcement;
- Concrete casting which covers the reinforcement and said formworks so as to form a layer of concrete topping;
- And wherein said disposable formworks comprise an integrated water tank equipped with at least one inlet pipe to feed said tank with a liquid and at least one outlet pipe to feed one or more external utilities with said liquid.

Therefore, the formworks created are produced according to one or more of the described features and particularly in such a way as to integrate the tank.

Advantageously, the method provides the connection of at least one of said outlet pipes to one or more external utilities.

Advantageously, said formworks are arranged side-by-side next to one another.

Advantageously, two or more said formworks is that they are connected to one another via liquid communication.

Advantageously, the inlet pipe being connected to the tank is that it can also function as an air vent.

### Brief description of drawings

The invention is described in detail, in accordance with the description of a preferred, but non-exclusive, method of execution which is illustrated schematically, as indicative and not exhaustive, in the attached figures, in which:
- Fig. 1 illustrates an axonometric overall view of a module, according to this invention.
- Fig. 2 illustrates a transverse sectional view of the module, in accordance with the section II-II.
- Fig. 3 illustrates a longitudinal section view of a representative portion of the module, in accordance with section III-III.
- Fig. 4 illustrates, in axonometric view, examples of the module layout.
- Figures 5 and 6 illustrate, in transverse and longitudinal sections respectively, another example of how to produce the module.
- Fig. 7 illustrates, in axonometric view, an example of how to construct a slab or covering by using said modules (10) as disposable formwork.

### Description of some preferred methods of execution

In accordance with the quoted figures, a module of disposable formwork with integrated water tank is indicated overall by the number (10).

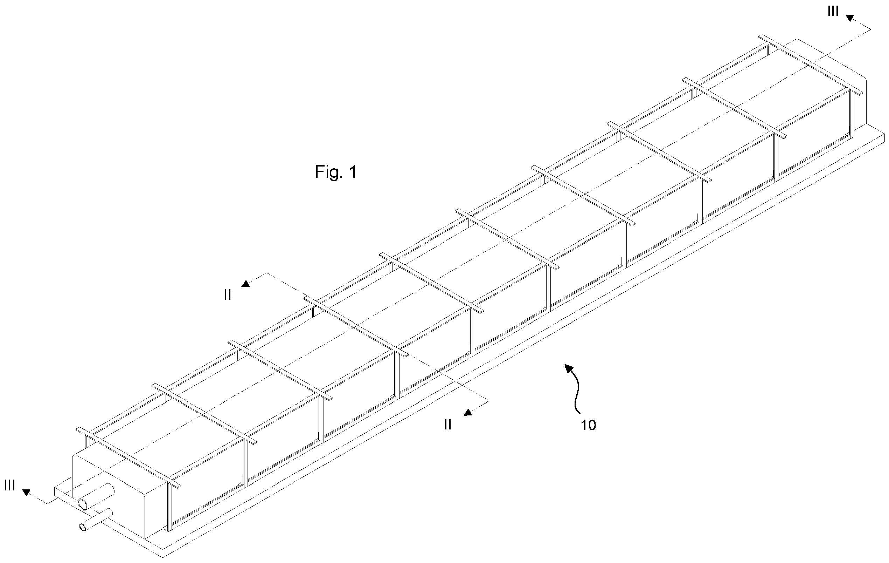

In particular, with reference to Fig. 1, the module (10) is produced in a parallelepiped-shape, with its biggest size in breadth, length and height which are of common use in these modular applications, which can vary on the basis of the inter-axis, the light and the final thickness of the slab to be produced. For example, it is possible to produce a module (10) of 60cm in breadth, 400cm in length and a suitable height to make a finished slab that is 30cm thick.

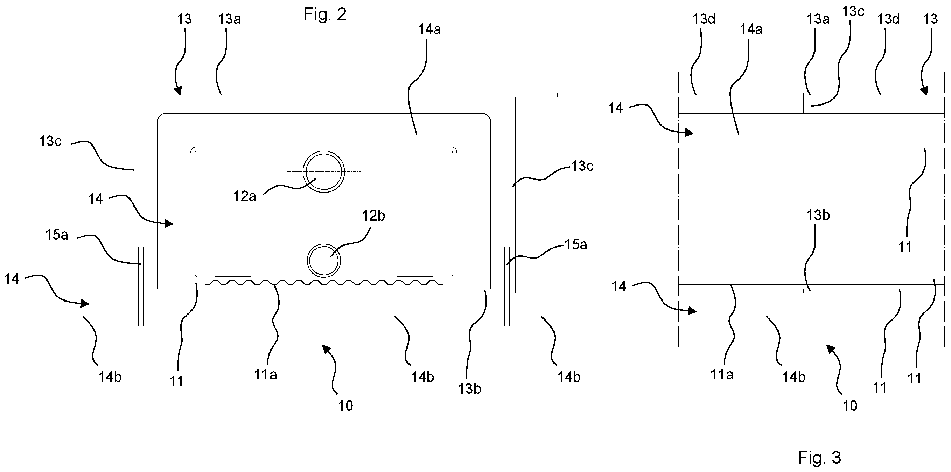

With reference to Fig. 2, a module (10) is made up of a water tank (11), preferably made of high-density polyethylene, for example through extrusion, if necessary has a metal support (11a) to stiffen the bottom surface, for example, built into the casing, preferably made by folding a galvanised steel sheet. The supply pipe (12a) is placed on top of the tank (11), in order to enable both the storage volume to be filled and the air to escape and thereby, also serving as an air vent. The bottom of the tank (11) is produced with slight inclines towards the bottom pipe (12b), which has the function of supplying water utilities within the building and draining at the bottom.

The module (10) comprises a shaped casing (14), which, if necessary, is then subdivided into two parts, for example, upper (14a) and lower (14b), which can be produced with the same material or in two different materials that have thermal and acoustic insulation properties. The portion of the upper casing (14a) insulates the exterior of the tank (11) above its base, while the lower portion of the casing (14b) is sheet-shaped with a rectangular-shaped section, for example, and insulates the lower surface of the tank (11). The shaped casing (14) or its upper (14a) and lower (14b) sides, can be made, for example, by extrusion, incorporating the body of the tank, or by cutting and sticking blocks of expanded material and a flush shaping, if any, according to a predetermined profile.

Preferably, the pipes (12a) (12b) are made of high-density polyethylene, together with the body of the tank (11), in order to shape a unique watertight element and enable connections with both the feed supply and the water collection/drainage to be made externally from the side of the upper casing (14a), for example through high-density polyethylene sleeves that can be welded electronically, or other connections of the known types. The metal frame (13) is made up of horizontal elements (transverse and longitudinal) and vertical elements, which are connected to assemble a structural mesh, whose function is to support the weight of the module (10) both when empty and when the tank is completely full, to support the weight of reinforcements, of workforces carrying out the works and to support the concrete casting. The metal frame (13) is made by welding the single metal elements, for example starting with metal bars that have a solid rectangular section, cut from elements with a predefined length, preferably in galvanised steel.

Holes are made on the lower horizontal transverse element (13b) of the metal frame (13), in correspondence with the points where the junctions meet for each internal side of the vertical elements (13c) within the metal frame (13), to facilitate the insertion of the metal tubular elements (15a) fitted with internal threading, which pass through the whole thickness of the side of the lower casing (14b), and are welded, for example, to the internal sides of the vertical elements (13c) within the metal frame (13).

With reference to Fig. 3, the horizontal transverse lower element (13b) of the metal frame (13) is inserted and fixed (for example with screws of the known type) through its thickness within the thickness of the tank's casing (11) adequately preformed by extrusion or grooved for such purpose.

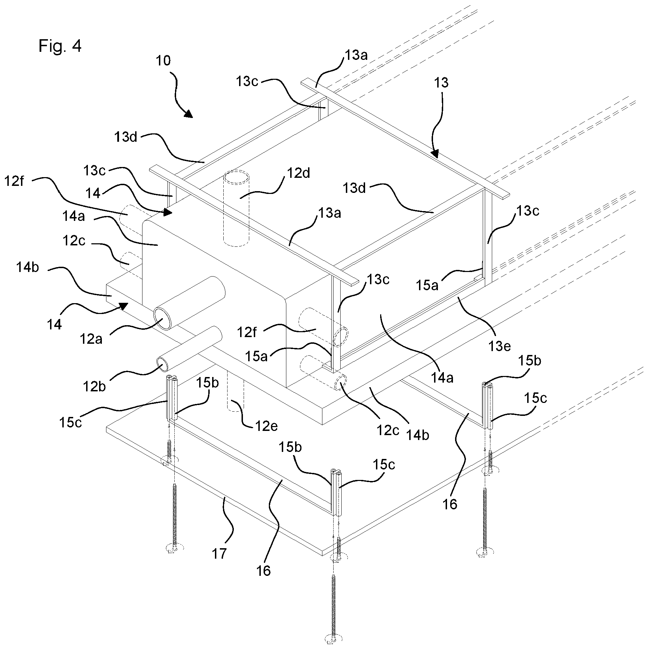

With reference to figure 4, the horizontal transverse upper elements (13a), the horizontal longitudinal upper elements (13d), the horizontal longitudinal lower elements (13e), the vertical elements (13c), all of them forming part of the metal frame (13), are made externally from the side of the upper casing (14a) and adequately spaced both laterally and above, in order to enable the formation of the adequate thickness for the concrete cover within the casting. The horizontal transverse upper elements (13a) of the metal frame (13) have flaps, whose function is to increase the resistance of anchorage within the casting of the lateral ribs. The metal tubular elements (15a) serve to anchor, through screws of the known type, further elements designed to house the pipes for technological systems and suspended ceilings in general. Panels (17) in general, for example in drywall, can be screwed on to the metal tubular elements (15a) directly. Another solution is represented by the production of a metal support element (16), for example made up of a metallic bar with solid rectangular section with two vertical sides and a horizontal side, with two integrated metal tubular elements (15b) (15c) fitted with internal threading where, for example, the metal tubular elements (15b) allow the support to be fixed (16) to the metal frame (13) through the metal tubular elements (15a). The metal tubular elements (15c) placed on the external side of the support (16) are helpful to anchor the panels (17) in general. In particular, the metal support element (16) is suitable to install the network of technological systems and eases the production of technical suspended ceilings. The supply pipe can be connected at least in a longitudinal (12a), vertical (12d), or lateral (12f) direction to the tank (11). Said pipe (12c) can be also used for the interconnection among two modules (10).

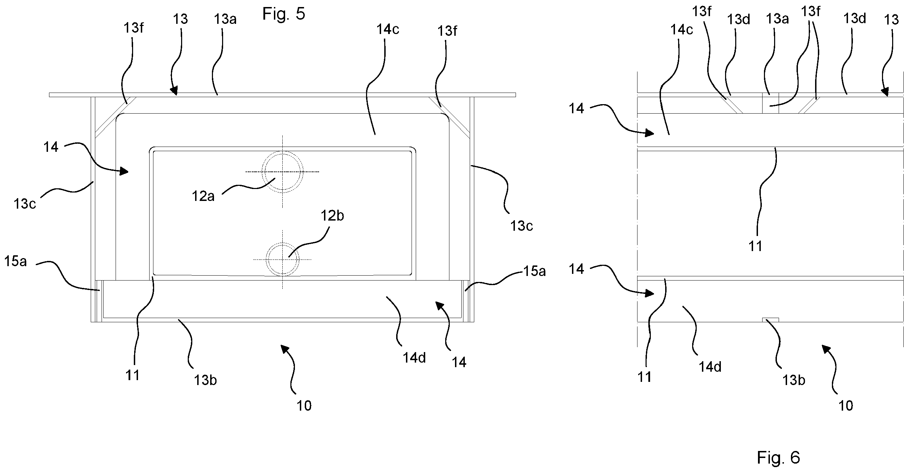

With reference to Fig. 5, another way of implementing the module (10) is suggested, where the side of the lower casing (14d) is made up of a stiff material which is capable of supporting the weight of a fully-loaded tank (11) without producing significant deformations alongside the inter-axis among the lower horizontal transverse elements (13b) within the metal frame (13). In this particular solution, no stiffening element (11a) is necessary at the bottom of the tank and part of the lower side of the casing (14d) is arranged on the horizontal transverse lower elements of the metal frame (13). The two parts of the upper (14c) and lower (14d) casing can be made of the same material or, alternatively, part of upper casing (14c) can be made from a lighter material, for example expanded products. In order to further stiffen the structure of the metal frame (13), some angular metal elements (13f) can be inserted by welding them in.

With reference to Fig. 6, the transverse horizontal lower element (13b) of the metal frame (13) through its thickness, is inserted within the layer that is at the side of the lower casing (14d), for example, made up of wood fibre panels, wood cement, pre-insulated metal panels made of polyurethane or mineral fibre, of adequate strength and cut from panels with modular dimensions.

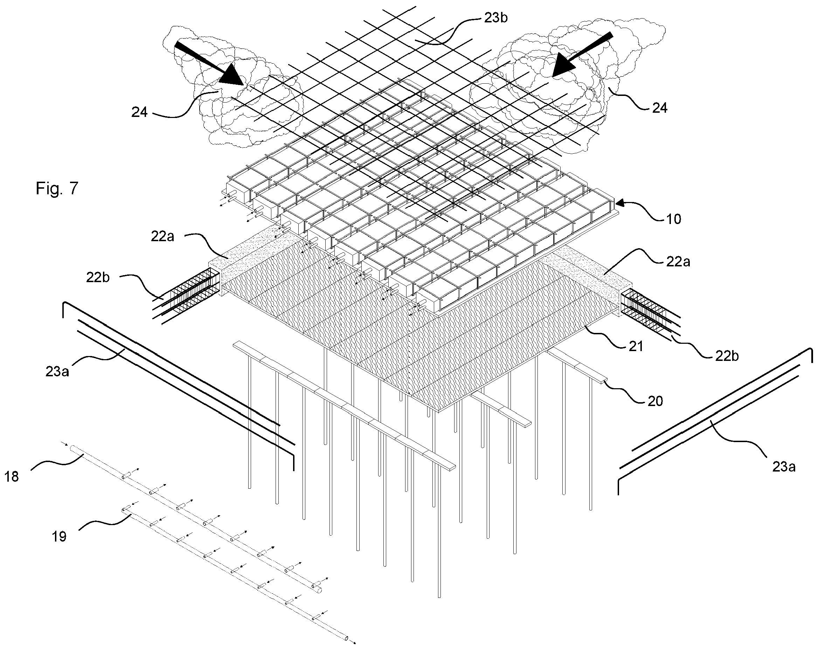

With reference to Fig.7, an example of a method used to construct a slab or roofing by using the formworks which are the subject of the invention is shown.

In accordance with what has already been disclosed in the known technique, the disposable formworks are used for the production of reinforced concrete slabs and roofing in general.

Contrary to the known technique, therefore, this new type of formwork is used, which, besides its traditional function of lightening and thermal and acoustic insulation, it also serves as storage for liquids, such as rainwater, thereby also used for water collection; therefore it can be used for a range of applications.

Therefore, the technique used to produce slabs and roofing remains the same as the one indicated in the known technique, with the exception of the use of such types of disposable formworks.

More in detail, the operative phases for making a concrete slab or a roofing are the following ones, with reference to figure 7.

A certain number of formworks, placed side-by-side one after the other, are laid out on temporary flooring.

Therefore, the disposable formworks, subject of the invention, are prefabricated elements like all normal formworks and, therefore, are stocked at collection points and, when necessary, they are collected and moved to then be relocated to and positioned on the building site.

In this case, therefore, the disposable formworks are moved and placed side-by-side one after the other, with reference to figure 7.

Connections, which can provide different connection strategies for modules, in parallel or in series, are made.

An example of a parallel connection is represented by Figure 7 schematically, where the inlet pipes for each tank are connected to a supply pipe suitable for filling the tank system), and where, contextually, the outlet pipes for each tank are connected to an intake pipe (which is used to drain the bottom and used as a source of supply for the utilities below).

An example of a series connection can provide: the connection of the supply pipe designed to fill the system of tanks, to the inlet pipe of the first formwork only; to connect the tanks in series for each formwork through an upper pipe that also works as an air vent and a pipe at the bottom that is used for drainage; the connection of the outlet pipe for the last formwork only to the inlet pipe.

Going into greater detail for figure 7, the steps involved to make the slab provide for temporary flooring to be laid out.

Such temporary flooring is made preferably within the internal perimeter of structural beams (22a) for the slab.

Said temporary flooring, for example, can be made up of a wooden floor (21), ideal to form a surface for a horizontal support.

Advantageously, a variety of pillars (20) are provided, which are used to support the weight of the flooring, the construction materials and the workers themselves.

Furthermore, with reference to figure 7, the modules (10) are laid out and pulled up on the temporary flooring.

Then the metal reinforcements (23a, 23b) are positioned on the basis of a specific structural project, connected, where provided by the structural diagram, on the metal reinforcements (22b) of the slab's beams (22a) and on the frames (13) of which said modules (10), described in accordance with the invention, are provided.

Then you must proceed to connect all of the inlet pipes (12a) to the manifold supply pipe (18), or rather to distribute and fill the tanks, which also function as air vents.

All the drain pipes (12b) are connected to the intake pipe (19), that is for collection and drainage at the bottom, which pipes the liquid to the given hydrostatic pressure to supply said pipe or more water utilities below.

Therefore, you must then proceed to cast the concrete layer (24) designed to shape the concrete topping.

After the casting has hardened (24), the temporary flooring is then dismantled.

The manifold supply pipe (18) is connected to the supply system, for example, to the rainwater collection network or to a filler tank placed at an overlooking level. The module tank is maintained at atmospheric pressure and it is fitted with an automatic filling device, if necessary.

The intake pipe (19) is connected to the internal water supply network, which will serve to feed one or more of the utilities, with a pressure equal to the difference of hydrostatic level between the level of the liquid in the tank/s and the liquid at the point of supply, for example, the flushing cistern tanks for toilets or dispensing valves for various utilities.

In fact, in accordance with the principle of communicating vessels, several tanks in liquid connection have the same level of liquid.

This invention has been hereinabove described with reference to the preferred methods of execution, albeit the existence of other methods of execution relating to the same inventive idea, as is defined in the subject matter pertaining to protection of the claims hereinafter.

From the perspective of production, therefore, the formwork can be made, for example, with a holding seat where the tank is placed or, alternatively, the tank can be integrated with the seat itself, that is, where the internal seat itself shapes a tank and serves, for example, to waterproof the tank.

According to the first method of execution hereinabove, the formwork can be made, for example, starting from sheets of material that have thermoacoustic insulation properties, for example, those produced by extrusion and from a tank, for example in polyethylene, even produced by extrusion.

The tank is covered with the insulating material externally so as to form a casing with a predefined structure. The insulating thermoacoustic casing can comprise wood fibre panels, cork panels or other materials not necessarily produced by extrusion. The tank can also be made from sheets or metal plates or other materials, therefore they are not necessarily produced by extrusion.

In accordance with the second method of execution hereinabove, the formwork can be made, for example, by the extrusion of thermoacoustic insulating material as a predefined internal geometric hollow shape, wherein the internal hollow is covered with a waterproofing material suitable for shaping an integrated tank with adequate strength and watertight integrity.

In both methods of execution, a support can be provided for the lower base, for example, by means of a sheet of stiff material or a metal plate, wherein the metal plate can also be incorporated into the tank's casing in any case, the above-mentioned is done so as to avoid significant deformations in the bottom of the tank's casing and/or of the formwork in its entirety, determined by the weight exerted by the volume of collected water.

As always, in both methods of execution, the formwork can be completed by using a metal frame suitable for supporting the weight of the formwork filled with water, as well as anchoring the formwork to the casted reinforced concrete topping.

The metal frame (13) can also collaborate structurally to the provided complex of reinforcements within the casting of the slab and/or roofing.

Preferably, the tank's casing will be made up of included inlet and outlet pipes, in order to have a unique watertight element, wherein hydraulic connections are made externally to the casing of the formwork.

As mentioned above, more tanks can be connected among them modularly, for example, by connecting the drain and inlet pipes to manifold pipes external to the casing of the formwork, or by putting them in hydro-communication with each other, for example through transverse pipes.

For example, a formwork can connect to a subsequent formwork connecting its outlet pipe to the intake pipe, thereby shaping only one network of discharge at the bottom and supply to the water utilities below.

At the same time, inlet pipes for each formwork can be connected to a manifold pipe, designed to shape only one tank-filling network, for example, supplied by a rainwater collection system, or by an atmospheric pressure tank, that potentially has a device to automatically fill the tank.

Therefore, by following such a sequence, more formworks can be connected to each other via water communication, where the water can enter through the single inlet pipe or through an overfilled tank to the next consecutive tank and where a unique system that drains at the bottom, as well as the intake to supply the utilities below, are carried out.

The tank stores the liquid inside at atmospheric pressure and therefore, the drainage (as well as the supply to utilities) occurs by means of gravity, that is by means of difference in the hydrostatic levels between the level of the liquid in the tank and the level of water supply.

Therefore, pumps and hydraulic systems, for example, are not necessary to pump the liquid to the utilities.

Furthermore, if the tanks in turn are filled through a collection system that works by means of rainwater gravity or are filled by another collection system that works by means of gravity, this means that the entire water system functions on gravity, which consequently saves energy and means that pumps and other devices normally used to pump fluid are not needed.

The inlet supply to tanks can therefore occur by means of gravity from a rainwater collection system or from a tank which is kept at atmospheric pressure and placed at an upper level.

In accordance with the invention, therefore, when it is deemed necessary, the user can take advantage of a water reserve.

## Claims

1. A disposable formwork used to make slabs and/or reinforced concrete roofing **characterised by the fact that** said formwork comprises at least one integrated water tank (11).

2. The formwork, in accordance with claim 1, which is made up of:
- A generally parallelepiped-shaped casing (14), preferably composed of material with thermal and acoustic insulation properties;
- A metal frame (13), which covers, at least partially, said shaped casing outwardly and connected to said shaped casing;
- And in which said shaped casing integrates within it said at least one water tank (11).

3. The formwork, in accordance with claim 2, wherein said tank is a separate element arranged in a seat made in the shaped casing or, alternatively, the seat of the shaped casing is waterproofed in such a way so as to function as a tank.

4. The formwork, in accordance with claim 3, wherein, in the event of a separate element, said tank rests or is fixed on a stiff base or on a metal support within said seat.

5. The formwork, in accordance with one or more of the hereinabove claims, wherein the tank is equipped with at least one inlet pipe (12a) to supply said tank with a liquid, and at least one outlet pipe (12b) to supply one or more utilities.

6. The formwork, in accordance with claim 5, wherein the inlet pipe is a supply pipe with a longitudinal (12a) and/or transverse (12f) and/or vertical (12d) axis with respect to the module (10) and which also functions as an air vent, and the outlet pipe is a bottom pipe with longitudinal (12b) and/or transverse (12c) and/or vertical (12e) axis with respect to the module (10) and with the function of supplying the building's internal water utilities and the drainage at the bottom, where said pipe (12c) can also enable the interconnection between adjacent modules (10).

7. The disposable formwork, in accordance with one or more of the hereinabove claims, wherein metal tubular elements (15a) are further comprised, equipped with internal threading, welded by vertical axis to the metal frame (13) on at least one of the sides and on the base of a vertical element (13c) of the frame, said tubular element (15a) continuing in length beyond a lower horizontal transverse element (13b) of the metal frame (13) and passing through the thickness of the casing in its lower side (14b), to anchor, through screws of the known types, further elements suitable to house pipes for technological systems and suspended ceilings in general or panels (17) in general.

8. The disposable formwork, in accordance with one or more of the hereinabove claims, **characterised by** the fact that it comprises a metal support element (16), suitable for supporting technological ceiling systems, said support (16) with tubular metal elements (15b, 15C) integrated to it by welding, fitted with internal threading, where said tubular metal elements (15b) allow the support to be fixed (16) to the metal frame (13) through the tubular metal elements (15a), where said tubular metal elements (15c) facilitate the anchorage of panels (17) in general.

9. The disposable formwork, in accordance with one or more of the claims, wherein the casing of the water tank (11) is made through the extrusion of high-density polyethylene, of polypropylene or of other similar materials, where said tank (11) incorporates a metal stiffening support (11a) within the thickness at the bottom of the casing.

10. The disposable formwork, in accordance with one or more of the claims, wherein the shaped casing (14) is made with at least the lower side (14b) made up of a stiff material that is able to support the full weight of the tank when it is completely full (11) without producing significant deformations along the inter-axis between the horizontal transverse lower elements (13b) of the metal frame (13).

11. The disposable formwork, in accordance with one or more of the claims, wherein angular metal elements (13f), suitable for further reinforcing the structure of the metal frame (13), are integrated by welding them to the frame (13).

12. The use of one or more disposable formworks, in accordance with one or more of the hereinabove claims, to make a slab and/or roofing in reinforced concrete.

13. A method used to make a slab and/or roofing in reinforced concrete, said method comprising the following phases:
- Production of one or more prefabricated and transportable disposable formworks (10);
- Production of temporary flooring (21);
- Positioning of said disposable formworks on said temporary flooring;
- Positioning of a metal reinforcement (23a, 23b);
- Concrete casting (24) which covers the reinforcement and said formworks so as to form a layer of concrete topping;
- And wherein said disposable formworks comprise an integrated water tank equipped with at least one inlet pipe to supply said tank with a liquid and at least one outlet pipe to supply one or more external utilities with said liquid, preferably the method providing the connection of at least one of said outlet pipes to one or more external utilities.

14. The method, in accordance with claim 13, wherein said formworks are positioned side-by-side to one another.

15. The method, in accordance with claim 13 or 14, wherein two or more of said formworks are connected to one another in liquid communication.
